(19) Europäisches Patentamt

European Patent Office

Office européen des brevets

(11) EP 1 623 910 A1

(12) **EUROPEAN PATENT APPLICATION**

(43) Date of publication:
08.02.2006 Bulletin 2006/06

(51) Int Cl.:
B62D 6/04 (2006.01)    B62D 5/04 (2006.01)

(21) Application number: 04103740.9

(22) Date of filing: 04.08.2004

(84) Designated Contracting States:
AT BE BG CH CY CZ DE DK EE ES FI FR GB GR
HU IE IT LI LU MC NL PL PT RO SE SI SK TR
Designated Extension States:
AL HR LT LV MK

(71) Applicant: **Ford Global Technologies, LLC, A subsidary of Ford
Motor Company
Dearborn, MI 48126 (US)**

(72) Inventors:
• **Requejo, Julian
52062, Aachen (DE)**

• **Mueller-Lerwe, Armin
50171, Kerpen-Bergerhausen (DE)**
• **Maurice, Jan Pieter
6164 NA, Kerkrade (NL)**
• **Burgio, Gilberto
52080, Aachen (DE)**

(74) Representative: **Drömer, Hans-Carsten et al
Ford-Werke Aktiengesellschaft,
Patentabteilung NH/DRP,
Henry-Ford-Strasse 1
50725 Köln (DE)**

(54) **Automotive steering system**

(57)    The Invention relates to a Steering System and a Method to steer a vehicle equipped with an Electric Power Assisted System (EPAS)(2) containing an Electric Control Unit (ECU)(6), whereby an additional external torque is commanded to an EPAS actuator (3) and pinion or column measurements are available externally to the EPAS (2) such that a Rack Position Control is implemented in the EPAS (2).

Figure 1

**Description**

The invention relates to a Steering System and a Method to steer a vehicle equipped with an Electric Power Assisted System (EPAS) containing an Electric Control Unit (ECU) .

The US 5,528,497 relates to a vehicle steering control system, comprising:

Steering torque input means and powered steering control means for applying a first actuating torque to steerable wheels of a vehicle according to a steering torque applied to said steering torque input means.

The System also comprises means for detecting a lateral dynamic condition of said vehicle; and active reaction generating means for applying a second actuating torque to said steerable wheels so as to control a turning movement of said vehicle according to a signal supplied from said detecting means, said active reaction generating means applying said second actuating torque during all travelling conditions of the vehicle such that an appropriate steering reaction is applied to a steering wheel of the vehicle during said all travelling conditions of the vehicle;

An overall actuating torque applied to said steerable wheels comprises a sum of said first and second actuating torques provided by said powered steering control means and said active reaction generating means.

The vehicle steering control system of US 5,528,497 also discloses, that said second actuating torque provided by said active reaction generating means being reduced as a steering angle of the vehicle increases and that said second actuating torque provided by said active reaction generating means being greater near a neutral point of said steering torque input means than in a larger steering angle range of said steering torque input means.

In the US 5,703,775 is also a vehicle steering control system disclosed, wherein is disclosed, that said second actuating torque being determined according to a deviation of an actual lateral dynamic response of said vehicle from a reference lateral dynamic response that is computed for each given steering input by representing said vehicle with a first-order delay transfer function, whereby an overall actuating torque applied to said steerable wheels comprises a sum of said first and second actuating torques provided by said powered steering control means and said active reaction generating means.

The US 6,112,845 relates to a vehicle steering system, comprising:

a steering shaft having a steering wheel at an end thereof;

a steering device attached to the other end of the steering shaft, and powered by an electric motor;

a manual steering torque sensor for detecting a manual steering torque applied from said steering wheel;

a normal steering assist torque determining unit for determining a normal steering assist torque according to a manual steering torque detected by said manual steering torque sensor;

a vehicle behaviour sensor for detecting a yaw rate and/or a lateral acceleration of the vehicle;

a reactive steering assist torque determining unit for determining a reactive steering assist torque according to a yaw rate and/or a lateral acceleration detected by said vehicle behaviour sensor; and

a control unit for controlling said electric motor according to outputs from said normal steering assist torque determining unit and said reactive steering assist torque determining unit,

wherein said vehicle behaviour sensor further comprises a reverse sensor for detecting a travelling direction of said vehicle, said control unit at least preventing a normal output from said reactive steering assist torque determining unit when the travelling direction detected by said reverse sensor indicates a rearward travel,

wherein the normal output from said reactive steering assist torque determining unit is for a forward travel direction of said vehicle, and

wherein said control unit reverses a sign of the normal output from said reactive steering assist torque determining unit when the travelling direction detected by said reverse sensor indicates a rearward travel.

An electric power steering apparatus for a vehicle for applying an assist force to steering systems so as to increase an operator's induced steering force is disclosed in the US 6,401,019 B2, said apparatus comprising:

a vehicle speed detecting unit for detecting a speed of said vehicle;

a torque detecting unit for detecting steering torque;

a deceleration calculating unit for calculating a deceleration of the vehicle from the vehicle speed detected by said vehicle speed detecting unit;

a first assist force calculating unit for calculating a first assist force from the detection results of said vehicle speed detecting unit and said torque detecting unit;

a second assist force calculating unit for calculating a second assist force in response to the deceleration calculated by said deceleration calculating unit; and

a control unit for applying to said steering system said assist force which is a sum of said first assist force calculated by said first assist force calculating unit and said second assist force calculated by said second assist force calculation unit.

The DE 197 02 313 C1 relates to a device for controlling the steering angle of a motor vehicle, having

a control element actuable by a user,

a vehicle-longitudinal-speed sensor system and

a steering-angle actuator which is coupled to the vehicle-longitudinal-speed sensor system and the control element in such a way that the desired steering-angle value is prescribed as a function of the activation force exerted on the control element and the sensed longitudinal speed of the vehicle, and including

control-element deflection means which deflect the control element in accordance with the respective actual steering-angle value.

The EP 1 215 103 A2 discloses a control of the dymanic movement of a vehicle arround a defined axis. A regulator determines a correction signal by difference building of an adjusting signal with a theoretical adjusting signal, which is computed by the filtering of the detrermined rate or turn and the correction signal is led back to the control transmission line. The determined rate of turn is filtered with the inversion of a desired guidance transmission function. The inverse of a model is implemented in the regulator, which describes a desired dynamic behaviour of the vehicle around the predetermined axis, depending on the setting of the control element, and that this model is dependent on the speed of the vehicle.

The EP 0 927 678 A1 relates to a automatic path correction system subjected to road disturbances or side wind. A Steering rack is free to move laterally along a slider driven by a hydraulic jack. The jack is actuated by an electro-valve to a position such that it's displacement is made equal to a reference value calculated from the vehicle speed, yaw and steering wheel angle.

In the JP 2000335235 relates to a deep side wind direction adjusting mechanism for automobile Resisitor, wherein a deep louver is directed straight forward, whereby an angle made by each of deep fins at both ends and acorresponding shut fin is set at substantially zero, the lower limit value,and the partial ventilitions paths opened fully.

The JP 03-105256 (=DE 39 23 854 A1) discloses an apparatus for measuring effect of side wind in a running vehicle, especially in a car. In the JP 03-105256 paipes are connected to the front shock bamper so that openeings are provided in the front of the car. When a wind comes from the right front and an incident angle is positive, a differenceis positive and, when a wind comes from the left front, the difference is a negative value.

The JP 04-342675 relates to a method for stabilizing vehicle against side wind. Hereby right and left corners of a front end are fitted with a separation acceleration means to accelerate the seperation of an air flow from both sides of the vehicle in the leeward of the corner. In the JP04-342675 yawing moments could be reduced with the acceleration of the air flow seperation, thereby stabilizing the vehicle, and an increase in air resistance could be restrained by limiting the acceleration.

The JP07-129883 relates to a side wind alarm system. A side wind influence degree recognizing means calculates the degree of the influence of the side wind from information from the outside of this vehicle. Contents of a degree of danger are reported by alarm means to the driver.

The EP 0529 244 B1 (=JP 05-196556) discloses a sensor for a vehicle for the purpose of registering the effect of crosswind on the travel behaviour of the vehicle, pressure measuring points, being positioned opposite each other on the sides of the vehicle to measure the air pressure occurring in the region of the car body shell, the pressure measuring points being mounted on the car body shell or designed as drilled holes in the car body shell, and a differential pressure sensor which registers a differential pressure between the two vehicle sides being positioned centrally between the two pressure measuring points and being connected to the two drilled holes via hoses or pipes, which are, as far as possible, of the same length, whereby a signal taken from the differential pressure sensor and representing the differential pressure is converted into a windward force signal resulting from the crosswind via correction factors dependent on the vehicle model and on the position of the pressure holes.

The EP 0 529 258 B1 relates to a method of minimising the effect of side wind on the behaviour of a travelling vehicle which can be steered at will by a driver and has at least two axles, wherein pressure take-off points are disposed opposite one another on the sides of the vehicle for measurement of the air pressure occurring in the region of the outer shell of the vehicle body, and by means of a setting member, which responds to the differential pressure between the pressure take-off points on both sides of the vehicle steering movements are produced on one axle which are directed against the effect of the side wind, whereby means of the setting member an additional steering angle is set on one axle in such a way that the change in the yawing angle of the vehicle caused by the side wind force acting on the vehicle tends towards zero, the said side wind force being defined by the differential pressure determined by measurement.

The EP 0 529 258 B1 also discloses an apparatus for minimising the effect of side wind on the behaviour of travelling vehicle which can be steered at will by a driver and has at least two axles, wherein pressure take-off points are disposed opposite one another on the sides of the vehicle for measurement of the air pressure occurring in the region of the outer shell of the vehicle body, and a setting member which responds to the differential pressure between the pressure take-off points on both sides of the vehicle produces steering movements on one axle which are directed against the effect of the side wind, whereby a control device sets the setting member for the steering angle on the axle in such a way that the change in the yawing angle of the vehicle caused by the side wind force acting on the vehicle tends towards zero, the said side wind force being defined by the differential pressure determined by measurement by means of a differential pressure sensor.

Electric Power Assisted Steering (EPAS) help the driver in giving the steering system the torque necessary to steer the vehicle. To do this an electrical actuator is placed in the system that delivers a torque as a function of the driver steering effort.

Known mechanical system (rack assist configuration), consist of motor and pinion subsystems, which respectively are responsible for the actuation and for the measurements for the system.

Sensors measure what is necessary to identify the driver's steering torque, the actuator state and the vehicle state. These measurements are processed every time trigger in the Electronic Control Unit (ECU) that compute the torque the electric motor has to supply.

The most important functionalty implemented in commercial EPAS system control units is mainly intended as:

- measuring the current driver torque ($T_d$);
- compute the desired assist torque as a function of the first

$$T_a = k\, f(T_d) \qquad\qquad (1)$$

where the function f is monotonic increasing and k is a high gain.

Due to the high gain, a big percentage of the steering effort is given by the assist device and a small percentage is given by the driver (ratio assist/driver torque of about 5/1, with peak values of 20/1).

The Problem is that EPAS system computes the torque (*Assist Torque*) necessary to assist or help the driver in driving; this means that EPAS is by, definition, directly driver related and not active vehicle control oriented. This is a limitation of this type of steering system, compared with other like AFS (Active Front Steering) or SBW (Steering by Wire).

It is an object of the Invention to provide a vehicle with an improved EPAS-System, capable to be vehicle oriented.

Inventionally this object is solved by the features of claims 1 and 8.

With the Invention

- an Additional External Torque can be commanded to the EPAS actuator (added to the torque for standard assist function implementation);
- pinion or column measurement are available externally to the EPAS system;
- Rack Position Control functionality is implemented;

so that active vehicle control can be implemented with a EPAS equipped vehicle.

A better understanding of the present invention will be obtained by reading the following detailed description of the invention in conjunction with the accompanying drawings, in which:

Fig.1     is a perspective view of a mechanical system,

Fig. 2     an EPAS System Block Diagram,

Fig. 3     an EPAS System Bode diagram, parameter assist gain,

Fig. 4     an EPAS System Bode diagram, parameter road load,

Fig. 5     EPAS equivalent parameters, function of rack load,

Fig. 6     Full Order vs. reduced order EPAS system Bode diagram,

Fig. 7     an open loop based position control scheme,

Fig. 8     Open Loop based control: basic simulation, no Driver's input,

Fig. 9     Open Loop based control: basic simulation, 20Nm from Driver's input through assist,

Fig. 10     Controller parameters, function of rack elastic constant,

Fig. 11     Closed Loop controller, function of equivalent tire load,

Fig. 12     Closed Loop controlled system, function of equivalent tire load,

Fig. 13     Open Loop plant + controller, function of equivalent tire load,

Fig. 14     Tire Aligning Moment and its gradient

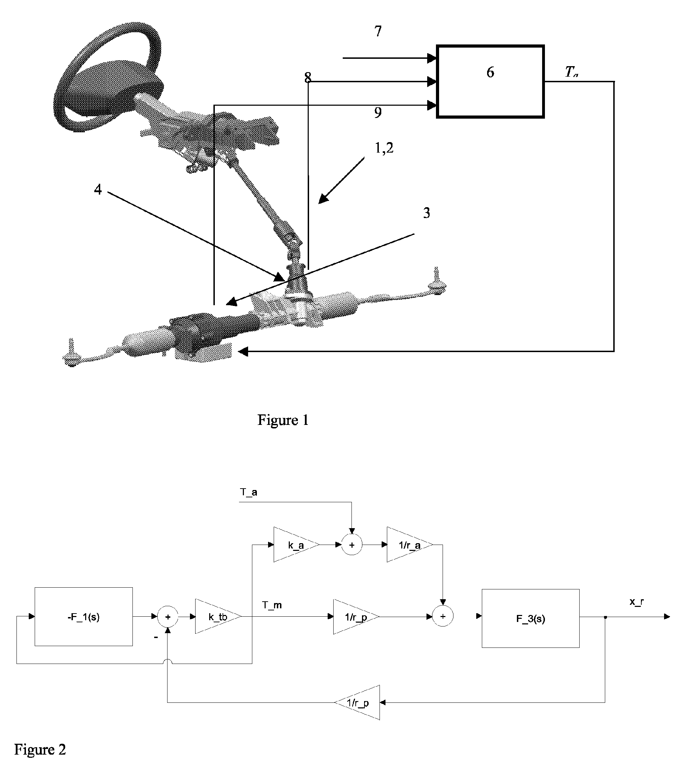

Figure 1 shows a steering device 1 as a mechanical system (rack assist configuration) with an Electric Power Assisted Steering System 2, which is called EPAS-System in the following. The EPAS-System has an electric motor 3 and pinion subsystems 4 which respectively are responsible for the actuation and the measurements for the System. A Electric Control Unit 6 (ECU) containing power electronics is attached to the EPAS-System 2. Environment/vehicle measurements (arrow 7) are put into the control Unit 6 as well as pinion torques $(T_m)$ (arrow 8) and other measurements (arrow 9).

The EPAS system main measurements are in general:

- pinion torque $(T_m)$;
- pinion position/velocity;
- electric motor currents;
- vehicle speed;
- other vehicle states....

and the actuator is typically an electric motor, located in the rack, or in the pinion or in the column.

The sensors measure what is necessary to identify the driver's steering torque, the actuator state and the vehicle state. These measurements are processed every time trigger in the ECU that computes the torque the electric motor has to supply in order to obtain:

- pleasant steering feel for the driver;
- an accurate steering performance.

The *basic assist function* (the most important one) implemented in EPAS system ECU is mainly intended as:

o measuring the current driver torque $(T_d)$;
o compute the desired assist torque as a function of the first

$$T_a = k\, f(T_d) \qquad (1)$$

where the function f is monotonic increasing and k is a high gain.

The Rack Position Control is a function that receives a delta Vehicle Wheel Angle Command ($\Delta VWA_C$) from vehicle control functionalities and computes the delta torque ($\Delta T$) the electric actuator needs to supply to get that Vehicle Wheel Angle displacement.

The implementation of Rack Position Control functionality is decomposed in the following steps:

1. receiving of a Vehicle Wheel Angle request of change;
2. reading values from EPAS system sensors;
3. compute the EPAS motor torque request of change;
4. actuate the computed EPAS torque request of change.

Step 3 needs to be designed in an accurate and robust way, to insure the effective actuation of the command ($\Delta VWA_C$) and the effective decoupling (or good interaction) of vehicle active functions and internal EPAS controller.

Moreover, the functionality has to be more effective when the driver is not giving torque to steer the wheels; when he does, his willing needs to dominate the active vehicle control request.

This is necessary for the safety related issues of this function.

The design work is split in 2 phases:

- the Input/Output analysis of the steering system;
- the controller structure definition .

The transfer function from the additional Assist Torque ($T_a$) to the rack displacement ($x_r$) can be written in Laplace domain in the following way (see fig. 2):

$$x_r = F_{xr,Ta}(s)\,T_a$$

$$F_{xr,Ta}(s) = \frac{\dfrac{F_3}{r_a}(1 + k_{tb}F_1(s))}{1 + k_{tb}F_1(s) + \dfrac{(k_a+1)k_{tb}}{r_p^2}F_3(s)} \tag{2}$$

where

$F_1(s)$    column subsystem transfer function (i.e. 2° order, input torque, output column angular position);
$F_3(s)$    rack subsystem transfer function, including vehicle load (i.e. 2° order, input Force, output rack displacement);
$x_r$    rack displacement;
$T_a$    additional Assist Torque;
$T_m$    measured Torque;
$r_a$    assist pinion radius;
$k_{tb}$    torsion bar torque constant;
$k_a$    assist torque gain;
$r_p$    column pinion radius.

The system is time invariant, but only locally linear, due to variations in:

1. $k_a$ this is the gain that locally linearise the basic assist curve;
2. the self aligning torque applied on the tires results in a spring like force in the rack subsystem $F_3(s)$, nonlinear function of vehicle speed ($v_v$) and of rack displacement ($x_r$).

EPAS model results to be a family of transfer functions

$$x_r = F_{xr,Ta}(x_r, v_v, k_a)(s)\,T_a \tag{3}$$

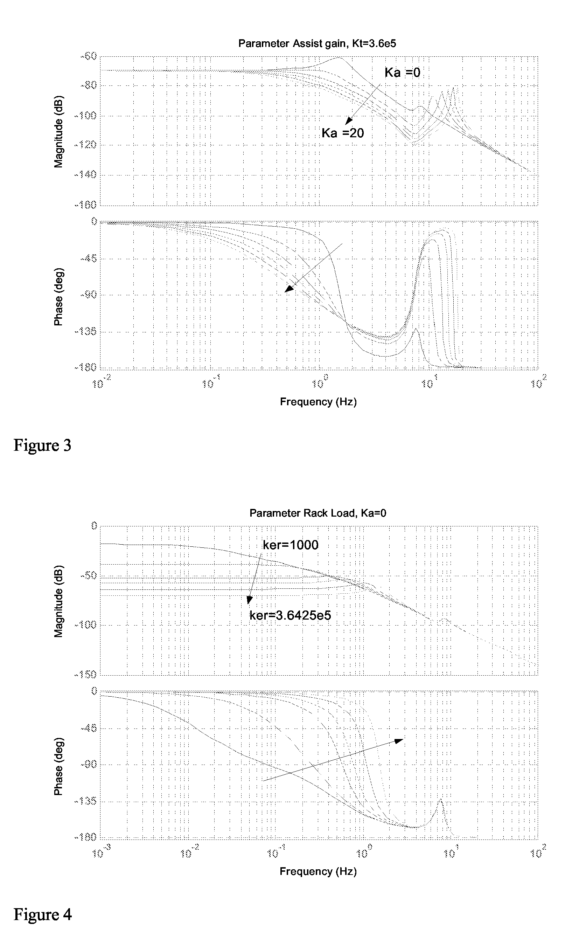

as shown in figures 3 and 4.

In figures 3 and 4 we see how the assist gain (calibration value, see fig. 3) and tires load (see fig. 4, where the parameter $k_{er}$ is a linear spring that gives to the rack subsystem $F_3(.)$ a load equivalent to the road load) change the frequency behavior of the transfer function defined in (2), with relevant effects on both steady state gain and dominant pole frequency cut.

From the previous paragraph we can summarize:

1. the plant, for frequencies up to -5Hz, can be approximated as a second order low-pass filter;
2. in this region, the plant most relevant frequency characteristic is a pair of complex poles, placed at 1 Hz or lower frequencies (fig. 4), function of tire load.
3. the plant low frequency gain is as well function of tire load, as in eq. (4).

The above considerations, together with the fact that a bandwidth of 5Hz is enough for vehicle control purposes, suggests the approximation of the EPAS model, for low frequency behavior, with a second order low-pass system, as:

$$F_{VWA\ Text}(s) = \frac{1}{J_{eq}s^2 + k_{f\ eq}s + k_{e\ eq}} \qquad (4)$$

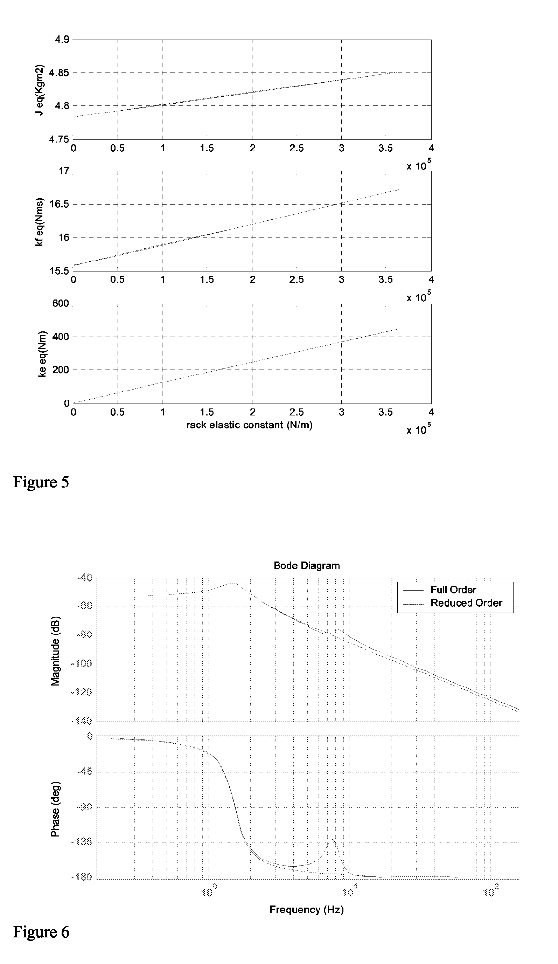

where the coefficients are described in fig. 5. The output was chosen to be Vehicle Wheel Angle *(VWA),* as this will be the target for the control. The relation between this and rack displacement is of proportionality, depending on steering system geometry and, for the current work, equal to:

$$VWA = x_r * 6.9813 \qquad (5)$$

Despite the equivalent elastic constant ($k_{e\ eq}$) has a clear and relevant dependency on rack elastic constant, either the equivalent inertia ($J_{eq}$) and viscous friction ($k_{f\ eq}$) result almost constant.

The final version of the reduced plant is:

$$F_{VWA\ Text}(s) = \frac{1}{J_{eq}s^2 + k_{f\ eq}s + k_{e\ eq}(k_{e\_r})}$$

$$J_{eq} = 4.8; \qquad (6)$$

$$k_{f\ eq} = 16;$$

$$k_{e\ eq} = 0.0012 * k_{e\_r};$$

and fig. 6 describes the fitting of the original EPAS model (1) and the proposed reduced order one, for the case $k_{e\_r}=$ 3.6425e+5, $k_a=0.$

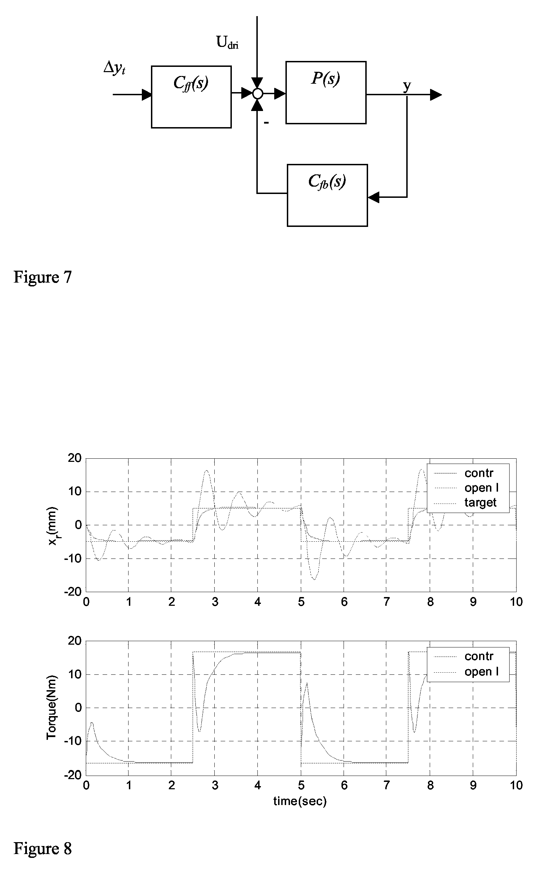

The basic idea for the controller design is to feed-forward actuate the request of Delta Vehicle Wheel Angle ($\Delta VWA_{req}$), and via feedback insure stability and repetitively of motion trajectories, as described in figure 7.

The output *y* can be ideally decomposed in 2 terms:

$$y = y(u_{dri}) + y(\Delta y_t) \qquad (7)$$

where the first is only affected by the driver and the second only affected by active functions request of change. If the independency of the effect on the output of the 2 input channels is valid, then EPAS active functions will well cooperate with Driver Assist Functions. But the plant is non linear and as well is the internal EPAS controller (whose output is $U_{dri}$). To limit then the interactions it's necessary to:

1. limit the gain of $C_{fb}(s)$ to the minimum required
2. avoid in $C_{fb}(s)$ any integral behavior.

As the plant is a second order system (eq. 6), a Proportional Derivative Controller (PD) controller is enough to damp its step response

$$C_{fb}(s) = K_p \frac{1+\tau_D s}{1+\tau_{HF} s} \qquad (8)$$

Moreover, an open loop gain and a Notch filter are necessary to drive the input to the target and to attenuate eventual not modeled resonance in the plant.

$$C_{ff}(s) = DCg_{ff} \frac{s^2 + 2\zeta_1 \omega_{n\_ff} s + \omega_{n\_ff}^2}{s^2 + 2\zeta_2 \omega_{n\_ff} s + \omega_{n\_ff}^2} \qquad (9)$$

With the plant of fig. 6 and the following tuning parameters

$DCg_{ff}$ = 3.3
$\omega_{n\_ff}$ = 5
$\zeta_1$ = 0.7
$\zeta_2$ = 0.9
$K_p$ = 1/15
$\tau_D$ = 7
$\tau_{HF}$ = 1/15

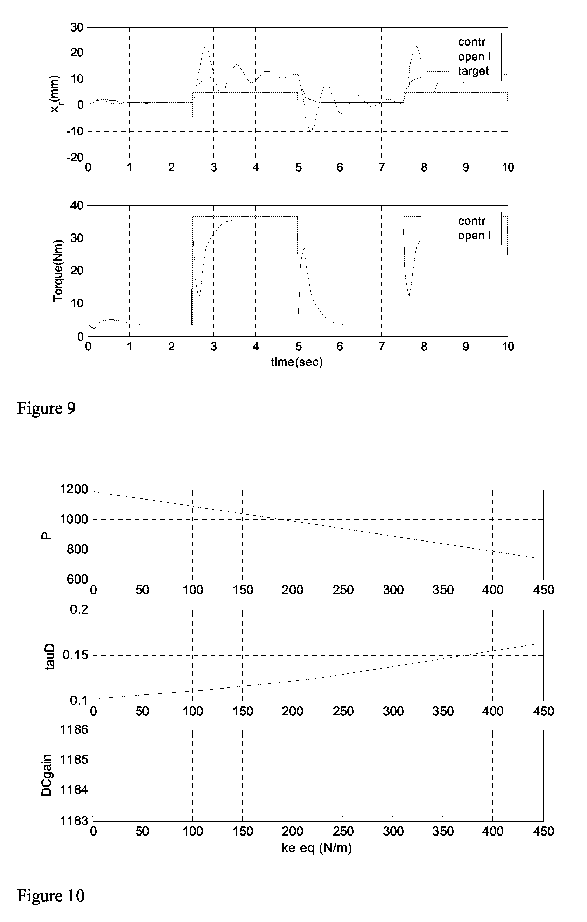

the tracking performance in fig. 8,9 is obtained. The target curve 11 is tracked by the controlled plant output 12, while stabilizing need is shown in the uncontrolled plant output 13. The relative commands are in the second stripe.
The same experiment is shown in the next fig. 9, where the driver is giving some steering input, too. As in this simulation the plant and the controller are linear, hypothesis (7) is true and consequently no negative interaction results from controller and driver's inputs. The effect of the control input is a delta motion of the output, according to the target, relative to the current working point.
This control scheme performs well for the given plant, but for all the family described in fig. 4 it has a steady state error, due to the variation of the tire gradients. It's therefore necessary to make it variable, function of equivalent elastic torque. The proposed controller would work well for one specific value of the rack elastic reaction; this approach needs to be extended for any general (known) value of it.
Let's consider the following plant:

$$P(s) = \frac{1}{Js^2 + k_a s + k_e} \qquad (10)$$

and the PD controller

$$C_{fb}(s) = K_p(1+\tau_D s) \qquad (11)$$

connected in negative feedback configuration, like in fig. 7 and with a feed-forward DC gain ($DCg_{ff}$).
The I/O relation $W(y\, y_t)$ is:

$$W(s) = \frac{DCg_{ff}\dfrac{1}{k_e + K_p}}{1 + \dfrac{k_a + K_p\tau_D}{k_e + K_p}s + \dfrac{s^2}{\dfrac{k_e + K_p}{J}}} \qquad (12)$$

and from this it's possible to derive some automatic tuning guideline, for a plant with time varying parameter, in this case with time varying spring like reaction $k_e$.

The requirements for the closed loop transfer functions are:

R1. constant bandwidth $\omega_{nT}$ of about 2.5 Hz;
R2. unitary gain $G_{WT}=1$;
R3. constant damping factor $\zeta_{wT}$ of about 0.9.

From the R1 the proportional gain is derived:

$$\omega_n = \sqrt{\frac{k_e + K_p}{J}} = \omega_{nT} \qquad (13)$$

$$K_p = J\omega_{nT}^2 - k_e \qquad (14)$$

From R1 and R3 comes that:

$$\frac{2\xi}{\omega_n} = \frac{k_a + K_p\tau_D}{k_e + K_p} = \frac{2\xi_T}{\omega_{nT}} \qquad (15)$$

and combining with (14) gives:

$$\tau_D = \frac{2J\omega_{nT}\zeta_T - k_a}{K_p} = \frac{2J\omega_{nT}\zeta_T - k_a}{J\omega_{nT}^2 - k_e} \qquad (16)$$

R2 finally gives the feed-forward DC gain ($DCg_{ff}$)

$$DCg_{ff}\frac{1}{k_e + K_p} = 1 \qquad (17)$$

which leads to

$$DCg_{ff} = k_e + K_p = J\omega_{nT}^2 \qquad (18)$$

The feedback controller was intentionally described without the high frequency pole, to have easier computations. A good rule for it is anyway to be quite bigger then the highest frequency of the controller, i.e.

$$\tau_{HF} = \frac{\tau_D}{10} \tag{19}$$

All the above, applied to the plant (6), leads to the controller (8), (9), with parameters:

$$\begin{cases} K_p = J_{eq}\omega_{nT}^2 - k_{e\,eq}(.) \\ \tau_D = \dfrac{2J\omega_{nT}\zeta_T - k_{f\,eq}}{K_p(.)} \\ \tau_{HF} = \dfrac{\tau_D}{10} \\ DCg_{ff} = J\omega_{nT}^2 \end{cases} \tag{20}$$

The figures 10 to 13 show, in sequence:

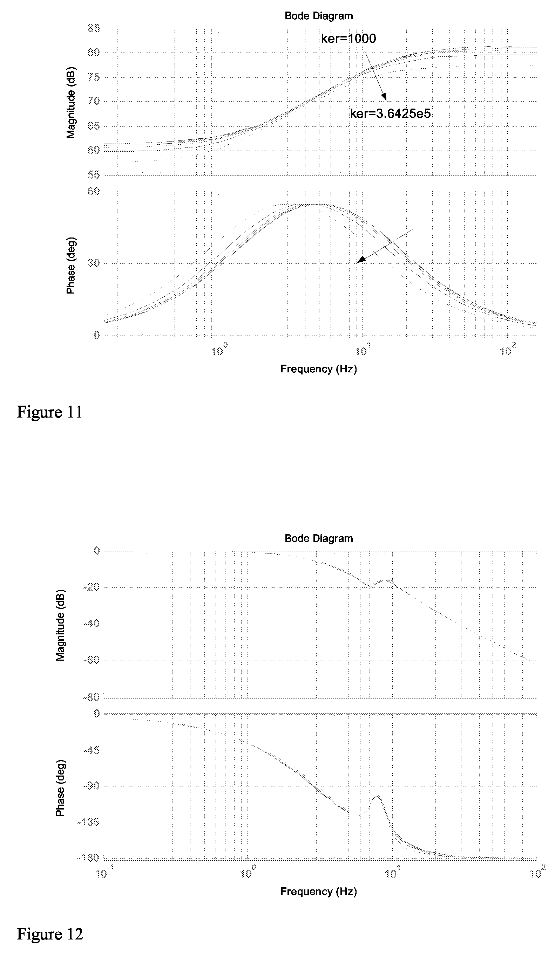

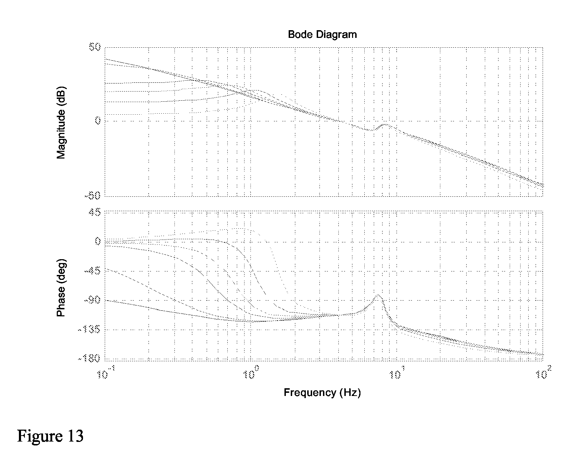

- the values of the controller parameters for the above described reduced order plant model (fig. 10);
- the family of defined feedback PD controllers (fig. 11);
- the obtained Closed Loop transfer functions *W(s)*, where the parametric dependency is heavily reduced by the controller (fig. 12);
- the relative Open Loop transfer function *P(s)\*C$_{fb}$(s)* (fig. 13).

REMARKS

- *DCg$_{ff}$* depends on the target natural frequency and not on the time varying spring like reaction $k_e$;

- $K_p$ linearly decreases as $k_e$ increases, to keep constant the bandwidth and can become negative too;

- $\tau_d$ increases hyperbolically as $k_e$ increases, to keep constant the damping factor, with a singularity in $J\omega_{nT}^2 = k_e$, where $K_p$ changes sign. It's therefore necessary to bound it to prevent going to infinity.

The described controller is in principle able to assign the required performance to the plant anyway, even if the plant is instable; actually this can happen, as soon as the tire gradient $k_e$ becomes negative. Of course in this case the controller will cost a lot in term of gain (high $K_p$) and bandwidth (small $\tau_D$).
But the controller bandwidth is limited by the sampling frequency (i.e. $t_s$=0.01s) and the gain by the actuator power.
In details here follows a description of how the sampling frequency influences the controller gains. The high frequency cut of the derivative term $t_{HF}$ is bounded by the sampling time

$$\tau_{HF\_min} \approx \frac{10t_s}{2\pi}; \qquad \tau_{D\_min} \approx 10\tau_{HF\_min} \approx \frac{100t_s}{2\pi} \tag{21}$$

and equating with (20)

$$\tau_D = \frac{2J\omega_{nT}\zeta_T - k_a}{K_p} > \tau_{D\_min} \tag{22}$$

or equivalently

$$\begin{cases} K_p \ge 0 \\ K_p < \dfrac{2J\omega_{nT}\zeta_T - k_a}{\tau_{D\_min}} \end{cases} \quad \text{or} \quad \begin{cases} K_p < 0 \\ K_p > \dfrac{2J\omega_{nT}\zeta_T - k_a}{\tau_{D\_min}} \end{cases} \quad (23)$$

which expressed in terms of $k_e$ gives:

$$\begin{cases} k_e \le J\omega_{nT}^2 \\ k_e > J\omega_{nT}^2 - \dfrac{2J\omega_{nT}\zeta_T - k_a}{\tau_{D\_min}} \end{cases} \quad \text{or} \quad \begin{cases} k_e > J\omega_{nT}^2 \\ k_e < J\omega_{nT}^2 - \dfrac{2J\omega_{nT}\zeta_T - k_a}{\tau_{D\_min}} \end{cases} \quad (24)$$

and finally the bound for $k_e$:

$$\begin{cases} \omega_{nT}\zeta_T > \dfrac{1}{2}\dfrac{k_a}{J} \\ J\omega_{nT}^2 - \dfrac{2J\omega_{nT}\zeta_T - k_a}{\tau_{D\_min}} < k_e < J\omega_{nT}^2 \end{cases} \quad \text{or} \quad \begin{cases} \omega_{nT}\zeta_T < \dfrac{1}{2}\dfrac{k_a}{J} \\ J\omega_{nT}^2 < k_e < J\omega_{nT}^2 + \left| \dfrac{2J\omega_{nT}\zeta_T - k_a}{\tau_{D\_min}} \right| \end{cases} \quad (25)$$

Here follows a description of how actuator power limit influences the controller gains.

This results, in general, in limitation of the gains in the feedback and in the feedforward chain:

$$\begin{cases} DCg_{ff} < DCg_{ffMAX} \\ K_p < K_{pMAX} \end{cases} \quad (26)$$

and consequently limitation in the target bandwidth and on the difference between some equivalent target stiffness and the actual stiffness:

$$\begin{cases} \omega_{nT} < \sqrt{\dfrac{DCg_{ffMAX}}{J}} \\ K_{pMAX} > J\omega_{nT}^2 - k_e = k_{eEQ} - k_e \end{cases} \quad (27)$$

As an example, if the controller requirements are:

- $\omega_{nT}$ of about 2.5 Hz
- $\zeta_{wT}$ of about 0.9 and the plant is the reduced order one previously described (eq. 4, fig. 5), then the constraint for $k_e$ is:

$$752 < k_e < 1184 \quad (28)$$

that is not in line with the equivalent elastic reaction identified (fig. 11).

If (26) changes to $\tau_{HF\_\min} \approx \dfrac{5t_s}{2\pi}$ , allowing for a higher controller bandwidth with the same sampling time, a little down-sampling then the controller, the constraint for $k_e$ becomes:

$$-320 < k_e < 1184 \qquad\qquad (29)$$

and becomes satisfied by the reduced order plant, allowing for negative tires stiffness, too (saturated tires).

The actuator constraints are in this case not considered, as they result less stringent then the sampling frequency one.

Up to now a method was described to control the steering position of the EPAS system, supposing that the rack elastic reaction ($k_{e\_r}$) is known. Actually, this can be estimated and this is here briefly addressed.

The phenomena that determine the trend of a vehicle to align the tires to its direction of motion is called tire aligning moment ($M_{z\_tires}$). This determines as well the amount of force to be given on the steering rack to be able to steer the vehicle or equivalently the rack elastic constant.

In equations, it comes that:

$$F_{rack} \sim M_{z\_tires} = M_{z\_tires}(\alpha_f, F_z) \qquad\qquad (30)$$

where the tire aligning moment is expressed in function of front tire slip angle and vertical force. Let's differentiate

$$\Delta F_{rack} \sim \Delta M_{z\_tires} = \left.\frac{\partial M_{z\_tires}}{\partial \alpha_f}\right|_{\alpha_{f0},F_{z0}} \Delta \alpha_f \qquad\qquad (31)$$

and from the definition of rack elastic reaction results that:

$$k_{e\_r} = \frac{dF_{rack}}{dx_r} \sim \frac{dF_{rack}}{dVWA} = \frac{dF_{rack}}{d\alpha_f} \sim \left.\frac{\partial M_{z\_tires}}{\partial \alpha_f}\right|_{\alpha_{f0},F_{z0}} \qquad\qquad (32)$$

The above relation allows the estimation of the rack elastic reaction, given the knowledge of:

- ■ front tire slip angle $\alpha_f$;
- ■ front tires vertical forces $F_z$.

and these are normally computed in a vehicle state estimator.

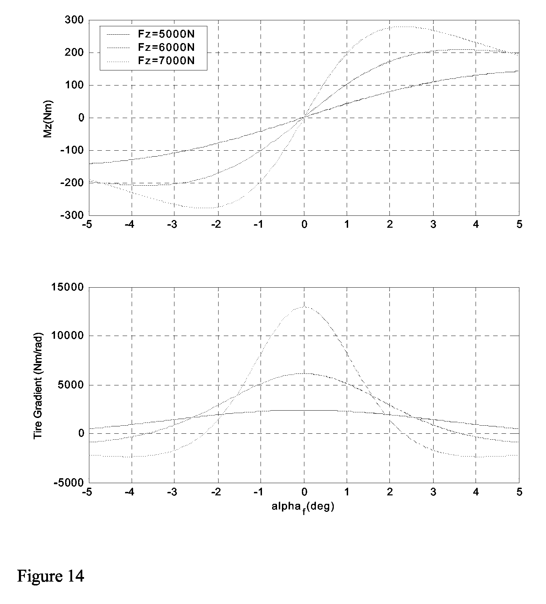

Figure 14 shows how the function $M_z$ and its derivative looks like in general.

**Claims**

1. Method to steer a vehicle with an Electric Power Assisted System (EPAS) (2) containing an Electric Control Unit (ECU) (6),
   **characterized by**
   an additional external torque commanded to an EPAS actuator (3) and pinion or column measurements which are available externally to the EPAS (2) such that a Rack Position Control is implemented in the EPAS (2).

2. Method according to claim 1,
   **characterized by**
   the design of an enabler of vehicle oriented functionalities within the vehicle equipped with the EPAS (2) steering system.

3. Method according to claim 1 or 2,
**characterized in that**
the implementation of Rack Position Control functionality contains the steps of:

Receiving of a Vehicle Wheel Angle request of change from vehicle level control functions,
determining values from EPAS system sensors,
determining EPAS motor torque request of change,
acuate the determined EPAS torque request of change.

4. Method according to one of the preceeding claims,
**characterized by**
a controller structure containing at least a feedback Proportional Derivative Controller (PD), a feedforward gain and a Notch compensator.

5. Method according to one of the preceeding claims,
**characterized by**
relative parametric implementation (eq. (8),(9)), where all main controller parameters are function of tire elastic reaction on the rack (eq. (20)).

6. Method according to claim 5,
**characterized by**
implementation of limitations on the tire elastic reactions (eq. (25) and (27)) and on the controller bandwidth (eq. 27)).

7. Method according to one of the preceeding claims,
**characterized by**
using tire aligning moment's gradient to estimate the tire elastic reaction on the rack and therefore to gain schedule the controller.

8. Steering system comprising an Electric Power Assisted System (EPAS) (2) containing an Electric Control Unit (ECU) (6) in particular according to one of the preceeding claims,
**characterized in that**
an additional external torque is commanded to an EPAS actuator (3) whereby pinion or column measurements are available externally to the EPAS (2) such that a Rack Position Control is implemented in the EPAS (2).

9. Steering system according to claim 8,
**characterized in that**
through the Rack Position control the EPAS actuator (3) is used to implement vehicle control functions.

Figure 1

Figure 2

Figure 3

Figure 4

Figure 5

Figure 6

Figure 7

Figure 8

Figure 9

Figure 10

Figure 11

Figure 12

Bode Diagram

Figure 13

Figure 14

## EUROPEAN SEARCH REPORT

**European Patent Office**

**Application Number**

EP 04 10 3740

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 127 775 A (MITSUBISHI ELECTRIC CORP) 29 August 2001 (2001-08-29) * abstract; figures 1,4 * * figures 1,2 * | 1-3,5,6, 8,9 | B62D6/04 B62D5/04 |
| Y | | 7 | |
| X | US 2003/060955 A1 (SUISSA AVSHALOM) 27 March 2003 (2003-03-27) * paragraph [0012] * * paragraph [0019] - paragraph [0022] * * paragraph [0032]; claim 2 * | 1-3,8 | |
| Y | EP 1 407 949 A (ADVICS CO LTD ; AISIN SEIKI (JP); TOYODA MACHINE WORKS LTD (JP)) 14 April 2004 (2004-04-14) * claim 1; figures 3-8 * | 7 | |
| X | EP 1 332 944 A (KOYO SEIKO CO) 6 August 2003 (2003-08-06) * claim 1; figures 1,2 * | 1,8 | |
| A | EP 1 013 536 A (TOYOTA MOTOR CO LTD) 28 June 2000 (2000-06-28) * abstract * | 1,8 | TECHNICAL FIELDS SEARCHED (Int.Cl.7) B62D |
| A | US 5 904 223 A (TOKUNAGA HIROYUKI ET AL) 18 May 1999 (1999-05-18) * abstract * | 1,8 | |
| A | EP 0 771 714 A (HONDA MOTOR CO LTD) 7 May 1997 (1997-05-07) * abstract * | 1,8 | |
| A | US 5 511 629 A (VOGEL THOMAS) 30 April 1996 (1996-04-30) * abstract * | 1,8 | |

The present search report has been drawn up for all claims

| Place of search | Date of completion of the search | Examiner |
|---|---|---|
| Berlin | 7 January 2005 | Kyriakides, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 04 10 3740

This annex lists the patent family members relating to the patent documents cited in the above-mentioned European search report.
The members are as contained in the European Patent Office EDP file on
The European Patent Office is in no way liable for these particulars which are merely given for the purpose of information.

07-01-2005

| Patent document cited in search report | | | Publication date | Patent family member(s) | | | Publication date |
|---|---|---|---|---|---|---|---|
| EP 1127775 | | A | 29-08-2001 | JP | 2001233232 | A | 28-08-2001 |
| | | | | EP | 1127775 | A1 | 29-08-2001 |
| | | | | US | 2002019690 | A1 | 14-02-2002 |
| US 2003060955 | | A1 | 27-03-2003 | DE | 10141425 | A1 | 13-03-2003 |
| | | | | JP | 2003104221 | A | 09-04-2003 |
| EP 1407949 | | A | 14-04-2004 | JP | 2004130965 | A | 30-04-2004 |
| | | | | EP | 1407949 | A1 | 14-04-2004 |
| | | | | US | 2004133324 | A1 | 08-07-2004 |
| EP 1332944 | | A | 06-08-2003 | JP | 2003226252 | A | 12-08-2003 |
| | | | | EP | 1332944 | A2 | 06-08-2003 |
| | | | | US | 2003146041 | A1 | 07-08-2003 |
| EP 1013536 | | A | 28-06-2000 | JP | 3525429 | B2 | 10-05-2004 |
| | | | | JP | 2000238654 | A | 05-09-2000 |
| | | | | EP | 1013536 | A2 | 28-06-2000 |
| | | | | US | 6239568 | B1 | 29-05-2001 |
| US 5904223 | | A | 18-05-1999 | JP | 3525969 | B2 | 10-05-2004 |
| | | | | JP | 9156518 | A | 17-06-1997 |
| | | | | DE | 19649166 | A1 | 05-06-1997 |
| EP 0771714 | | A | 07-05-1997 | JP | 9128699 | A | 16-05-1997 |
| | | | | JP | 3569581 | B2 | 22-09-2004 |
| | | | | JP | 9156527 | A | 17-06-1997 |
| | | | | DE | 69619333 | D1 | 28-03-2002 |
| | | | | DE | 69619333 | T2 | 25-07-2002 |
| | | | | EP | 0771714 | A2 | 07-05-1997 |
| | | | | US | 6053270 | A | 25-04-2000 |
| US 5511629 | | A | 30-04-1996 | DE | 4304664 | A1 | 18-08-1994 |
| | | | | FR | 2701443 | A1 | 19-08-1994 |
| | | | | GB | 2275032 | A ,B | 17-08-1994 |
| | | | | IT | 1272165 | B | 16-06-1997 |
| | | | | JP | 2819383 | B2 | 30-10-1998 |
| | | | | JP | 7251748 | A | 03-10-1995 |

EPO FORM P0459

For more details about this annex : see Official Journal of the European Patent Office, No. 12/82